# EUROPÄISCHE PATENTANMELDUNG

(11) **EP 3 944 470 A1**
(43) Veröffentlichungstag der Anmeldung: **26.01.2022**
(21) Anmeldenummer: 20187404.7
(22) Anmeldetag: 23.07.2020
(51) Int. Cl.: H02K 5/173

(54) **LAGERSCHILD**

(71) Anmelder: Hilti Aktiengesellschaft, 9494 Schaan (LI)
(72) Erfinder: Artmann, Konrad, 86938 Schondorf (DE); Ludwig, Wolfgang, 86874 Zaisertshofen (DE); Schreiber, Wolfgang, 86807 Buchloe (DE); Schmid, Tobias, 86875 Emmenhausen (DE)
(74) Vertreter: Hilti Aktiengesellschaft Corporate Intellectual Property

(57) **Zusammenfassung**

Lagerschild für einen Elektromotor enthaltend eine Aufnahmeeinrichtung mit einer Innenmantelfläche zum Aufnehmen und Halten wenigstens eines Lagers, wobei wenigstens vier symmetrisch angeordnete, sich radial erstreckende Erhebungen so an der Innenmantelfläche der Aufnahmeeinrichtung positioniert sind, dass zwischen zwei an der Innenmantelfläche innenliegenden Erhebungen und zwei an der Innenmantelfläche außenliegenden Erhebungen ein Freiraum zum Aufnehmen und Halten wenigstens eines Dichtungselements enthalten ist.

## Beschreibung

Die vorliegende Erfindung betrifft eine Lagerschild für einen Elektromotor enthaltend eine Aufnahmeeinrichtung mit einer Innenmantelfläche zum Aufnehmen und Halten wenigstens eines Lagers.

Elektromotoren, wie beispielsweise als Antrieb für eine Werkzeugmaschine, weisen zumeist einen Lagerschild zum Aufnehmen und Halten eines Kugellagers auf. Das Kugellager dient dabei zum lagern eines Endes einer Rotorwelle. Die Rotorwelle ragt dabei aus dem Blechpaket des Elektromotors heraus und überträgt das in dem Elektromotor erzeugte Drehmoment auf weitere Komponenten, wie beispielsweise ein Getriebe.

Damit die Rotorwelle optimal mit Hilfe des (Kugel-)Lagers gelagert ist und mögliche Beschädigungen an dem Lager verhindert werden können, muss unter anderem ein Mitdrehen bzw. ein Drehen eines Außenrings des Lagers relativ zu einem Innenring des Lagers vermieden werden.

Aus dem Stand der Technik bekannte Vorrichtungen zum Verhindern eines Mitdrehens bzw. eines Drehens eines Lageraußenrings relativ zu einem Lagerinnenrings sind für gewöhnlich unzureichend und/oder zu komplex.

Aufgabe der vorliegenden Erfindung ist es daher, ein Lagerschild für einen Elektromotor bereitzustellen, mit dem das vorstehend genannte Problem gelöst werden kann.

Die Aufgabe wird jeweils gelöst durch den Gegenstand des unabhängigen Anspruchs 1. Weitere vorteilhafte Ausgestaltungsformen der Erfindung finden sich in den entsprechenden Unteransprüchen.

Die Aufgabe wird insbesondere gelöst durch einen Lagerschild für einen Elektromotor enthaltend eine Aufnahmeeinrichtung mit einer Innenmantelfläche zum Aufnehmen und Halten wenigstens eines Lagers.

Erfindungsgemäß ist vorgesehen, dass wenigstens vier symmetrisch angeordnete, sich radial erstreckende Erhebungen so an der Innenmantelfläche der Aufnahmeeinrichtung positioniert sind, dass zwischen zwei an der Innenmantelfläche innenliegenden Erhebungen und zwei an der Innenmantelfläche außenliegenden Erhebungen ein Freiraum zum Aufnehmen und Halten wenigstens eines Dichtungselements enthalten ist. Hierdurch kann auf effektive Art und Weise ein Mitdrehen bzw. ein Drehen eines Außenrings des Lagers relativ zu einem Innenring des Lagers vermieden werden. Das Dichtungselement dient dabei als Bremselement, mit dem der Lageraußenring gebremst werden kann. Durch die Positionierung des Dichtungselements in dem Freiraum zwischen den Erhebungen wird das Dichtungselement und folglich auch das Lager in einer vorbestimmten Ausrichtung gehalten.

Gemäß einer vorteilhaften Ausführungsform der vorliegenden Erfindung kann es möglich sein, dass die innenliegenden Erhebungen versetzt zu den außenliegenden Erhebungen positioniert sind, sodass in axialer Richtung kein gradliniger Durchgang zwischen den Erhebungen gegeben ist. Hierdurch kann verhindert werden, dass das zwischen den Erhebungen positionierte Dichtungselement an der Innenmantelfläche der Aufnahmeeinrichtung lokal verschoben wird.

Entsprechend einer weiteren vorteilhaften Ausführungsform der vorliegenden Erfindung kann es möglich sein, dass der Freiraum in Form einer Nut zwischen den Erhebungen ausgestaltet ist.

Gemäß einer weiteren vorteilhaften Ausführungsform der vorliegenden Erfindung kann es möglich sein, dass zwischen vier und zwölf Erhebungen an der Innenmantelfläche der Aufnahmeeinrichtung positioniert sind. Hierdurch kann eine verbesserte Positionierung des Dichtungselements zwischen den Erhebungen erreicht werden.

Entsprechend einer weiteren vorteilhaften Ausführungsform der vorliegenden Erfindung kann es möglich sein, dass das wenigstens eine Dichtungselement in Form eines O-Rings ausgestaltet ist. Der O-Ring besteht dabei aus einem elastischen Werkstoff.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Ansicht auf ein erfindungsgemäßen Lagerschild;
- Figur 2: eine seitliche Schnittansicht durch den Lagerschild;

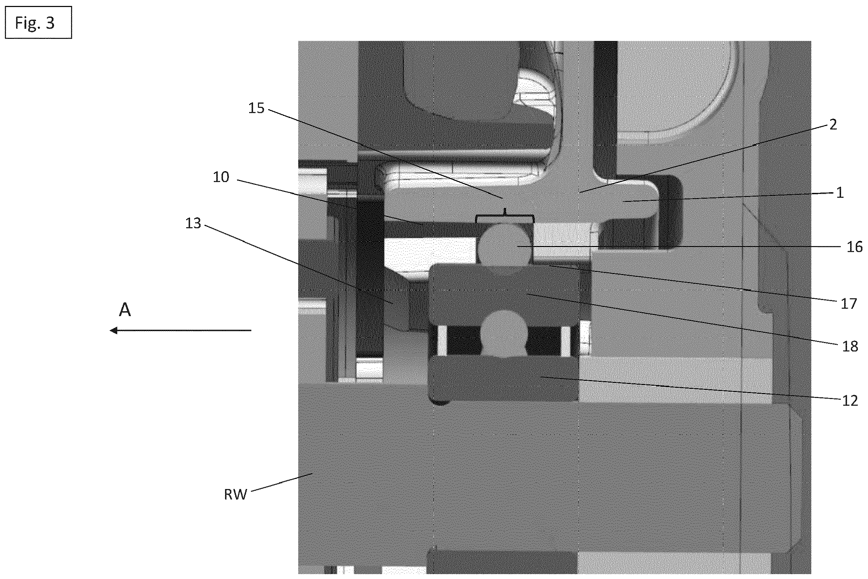

- Figur 3: eine seitliche Schnittansicht auf einen oberen Anteil eines Lagers und ein Dichtungselement;
- Figur 4: eine seitliche Schnittansicht durch einen Elektromotor mit dem Lagerschild ohne Lager, Dichtungselement und Rotorwelle;
- Figur 5: eine seitliche Schnittansicht durch den Elektromotor mit dem Lagerschild und dem Dichtungselement, ohne Lager und Rotorwelle;
- Figur 6: eine seitliche Schnittansicht durch den Elektromotor mit dem Lagerschild, dem Dichtungselement und dem Lager und ohne Rotorwelle; und
- Figur 7: eine seitliche Schnittansicht durch den Elektromotor mit dem Lagerschild, dem Dichtungselement, dem Lager und der Rotorwelle.

### Ausführunasbeispiele:

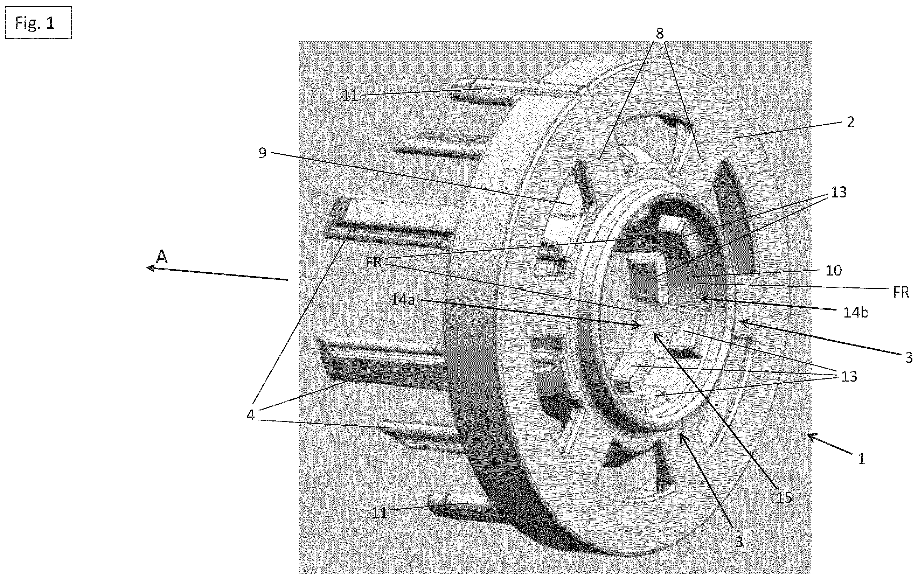

In Figur 1 ist ein erfindungsgemäßer Lagerschild 1 gezeigt. Das Lagerschild 1 enthält im Wesentlichen ein äußeres Ringelement 2, eine Aufnahmeeinrichtung 3 und eine Anzahl an Haltestegen 4.

Wie in den Figuren angedeutet ist das Lagerschild 1 dazu vorgesehen, an einem Elektromotor 5 angebracht zu werden. Der Elektromotor 5 enthält dabei im Wesentlichen einen Stator 6, einen sich relativ zu dem Stator 6 drehenden Rotor 7 sowie eine drehfest mit dem Rotor 7 verbundene Rotorwelle RW.

Die Aufnahmeeinrichtung 3 ist zentral im Inneren des äußeren Ringelements 2 positioniert. Sechs radial verlaufende Speichenelemente 8 verbinden dabei das äußere Ringelement 2 mit der Aufnahmeeinrichtung 3.

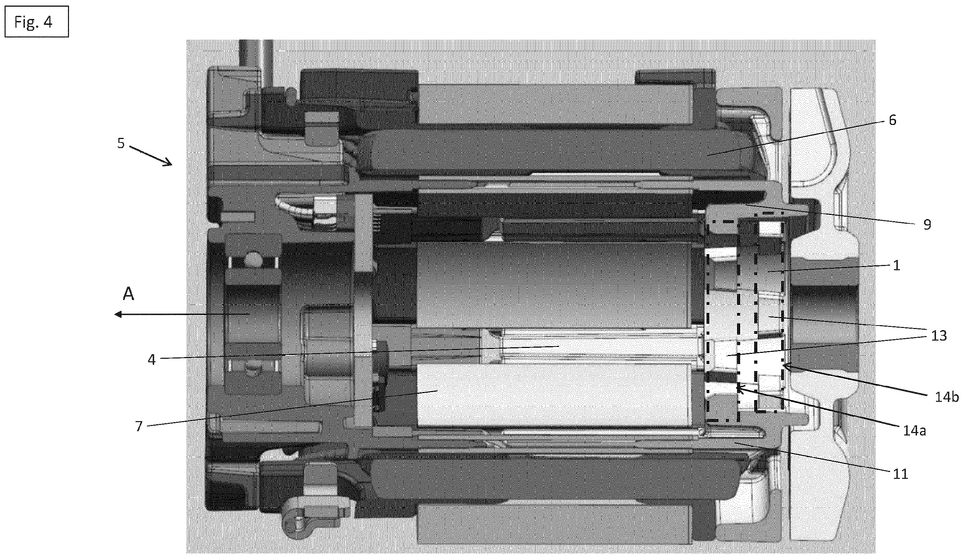

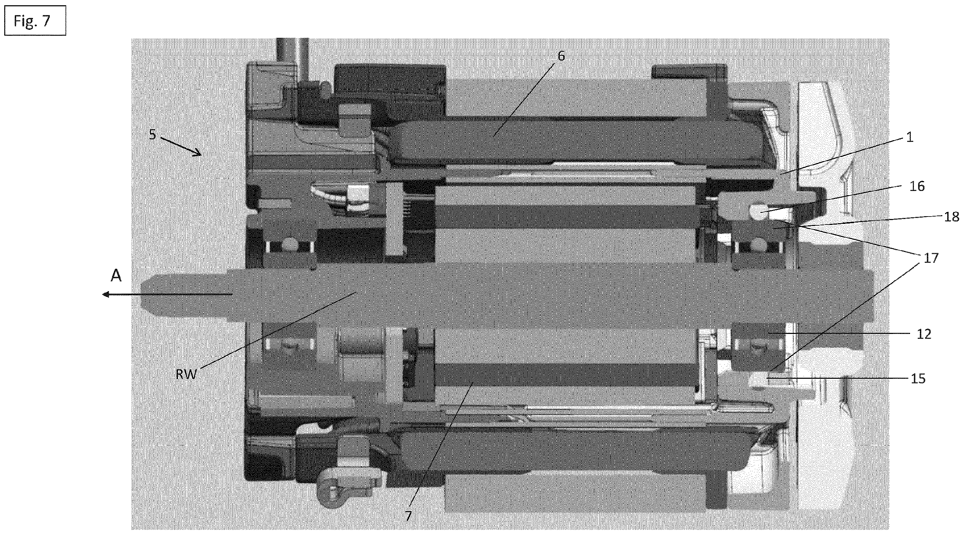

Die Aufnahmeeinrichtung 3 enthält eine Außenmantelfläche 9 sowie eine Innenmantelfläche 10. Wie in Figur 1 angedeutet, erstrecken sich die Haltestege 4 in axialer Richtung A von der Außenmantelfläche 9 der Aufnahmeeinrichtung 3. Die Haltestege 4 dienen zum Positionieren und Fixieren des Lagerschilds 1 an dem Stator 6, vgl. Figur 4 bis 7. Die freien Enden 4a der Haltestege 4 werden hierzu in die jeweiligen Freiräume zwischen den Spulen des Stators 6 eingeschoben.

Wie Figur 1 ebenfalls zu entnehmen ist enthält das äußere Ringelement 2 drei axial verlaufende Fixierstege 11. Diese Fixierstege 11 dient zusätzlich zum Befestigen des Lagerschilds 1 an dem Stator 6.

Die Innenmantelfläche 10 der Aufnahmeeinrichtung 3 dient zum Aufnehmen und Halten wenigstens eines Lagers 12. In dem vorliegenden Ausführungsbeispiel ist das Lager 12 als Kugellager ausgestaltet. Alternativ kann das Lager 12 auch in Form eines Gleit- oder Nadellager ausgestaltet sein.

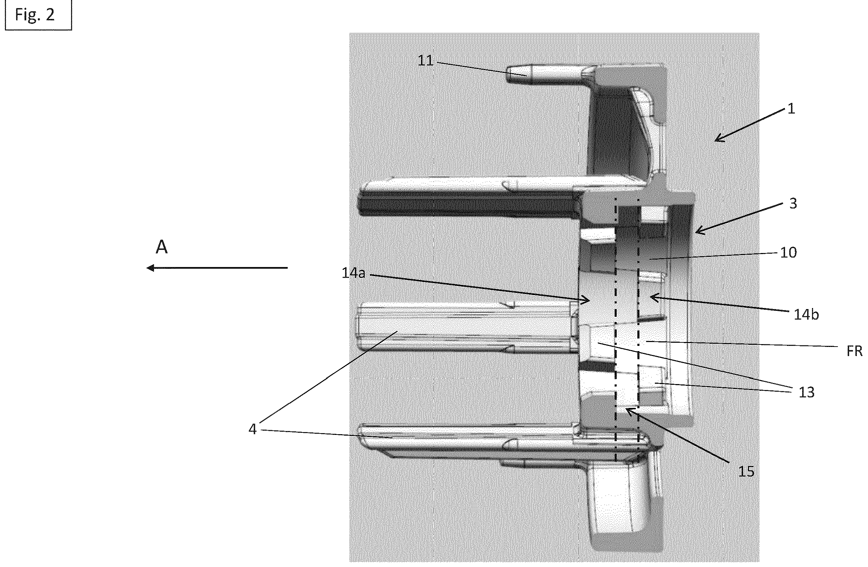

Wie insbesondere in den Figuren 1 und 2 angedeutet ist, enthält die Aufnahmeeinrichtung 3 an der Innenmantelfläche 10 symmetrisch angeordnete, sich radial erstreckende Erhebungen 13. Wie in den Figuren erkennbar, ist jede Erhebung 13 leicht konisch ausgestaltet.

Die Erhebungen 13 sind in den vorliegenden Ausführungsbeispiel dabei in einer ersten und zweiten ringförmigen Anordnungen 14a, 14b positioniert. Die erste ringförmige Anordnung 14a von Erhebungen13 ist in Pfeilrichtung A hinter der zweiten ringförmigen Anordnung 14b von Erhebungen 13 positioniert. Die Erhebungen 13 der ersten und zweiten ringförmigen Anordnungen 14a, 14b sind so zueinander versetzt angeordnet, dass keine Erhebung 13 der ersten oder zweiten ringförmigen Anordnungen 14a, 14b in Pfeilrichtung A hintereinander angeordnet ist. Mit anderen Worten: Jede Erhebung 13 der zweiten ringförmigen Anordnungen 14b fluchtet in axialer Pfeilrichtung A in einen Freiraum FR zwischen zwei Erhebungen 13 der ersten ringförmigen Anordnung 14a. Die Erhebungen 13 der ersten und zweiten ringförmigen Anordnung 14a, 14b sind somit nicht in axialer Pfeilrichtung A hintereinander, sondern versetzt zueinander positioniert. Darüber hinaus sind die Erhebungen 13 der ersten und zweiten ringförmigen Anordnungen 14a, 14b in axialer Pfeilrichtung A zueinander so beabstandet, dass ein ringförmiger Freiraum 15 zwischen den beiden ringförmigen Anordnungen 14a, 14b der Erhebungen 13 gegeben ist. Der ringförmige Freiraum 15 kann auch als Nut oder Ring-Nut bezeichnet werden. In Figur 2 ist der ringförmige Freiraum 15 zwischen den beiden gestrichelten Linien dargestellt.

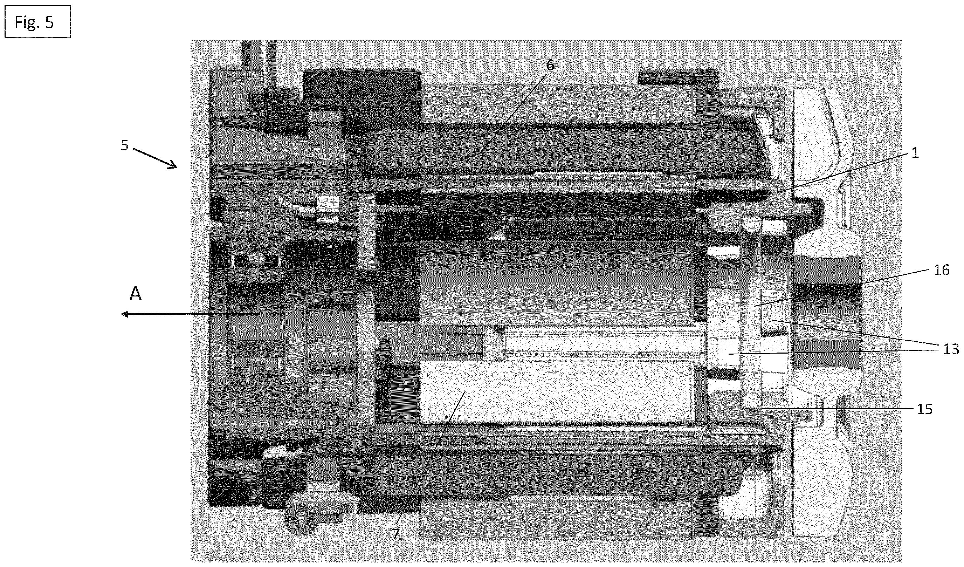

In den ringförmigen Freiraum 15 ist ein Dichtungselement 16 eingelegt, vgl. Figur 5. Die Breite in axialer Pfeilrichtung A des ringförmigen Freiraums 15 entspricht dabei ungefähr der Breite der Querschnittsfläche des Dichtungselements 16.

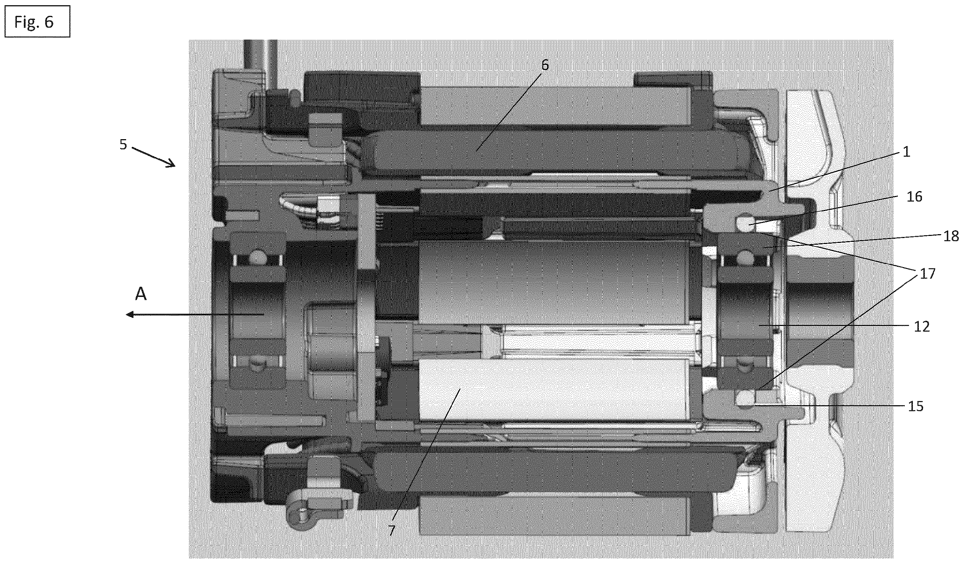

Wie in Figur 6 erkennbar, ist in die Aufnahmeeinrichtung 3 das Lager 12 positioniert. Das Dichtungselement 16 liegt dabei zwischen der Innenmantelfläche 10 der Aufnahmeeinrichtung 3 und der Außenmantelfläche 17 des Lagers 12. Die Dimensionen des Innendurchmessers der Aufnahmeeinrichtung 3, der Außendurchmessers des Lagers 12 und die Breite der Querschnittsfläche des Dichtungselements 16 sind dabei so gewählt, dass die Außenmantelfläche 17 des Lagers 12 sowie die Innenmantelfläche 10 der Aufnahmeeinrichtung 3 auf das Dichtungselement 16 drücken. Das Dichtungselement 16 wird etwas gequetscht und so verformt, dass das Dichtungselement 16 in die Freiräume FR zwischen die einzelnen Erhebungen 13 gedrückt wird. Durch das Quetschen und die daraus resultierende Verformung des Dichtungselements 16 ist das Lager 12 fest in der Aufnahmeeinrichtung 3 positioniert. Das Dichtungselement 16 dient als Bremse und verhindert, dass das Lager 12 und insbesondere eine Lageraußenring 18 verdreht wird.

### Bezugszeichen:

- 1: Lagerschild
- 2: äußere Ringelement
- 3: Aufnahmeeinrichtung
- 4: Haltestege
- 5: Elektromotor
- 6: Stator
- 7: Rotor
- 8: Speichenelement
- 9: Außenmantelfläche der Aufnahmeeinrichtung
- 10: Innenmantelfläche der Aufnahmeeinrichtung
- 11: Fixiersteg
- 12: Lager
- 13: Erhebung
- 14a: erste ringförmige Anordnungen von Erhebungen
- 14b: zweite ringförmige Anordnungen von Erhebungen
- 15: ringförmiger Freiraum
- 16: Dichtungselement
- 17: Außenmantelfläche des Lagers
- 18: Lageraußenring

- FR: Freiraum
- RW: Rotorwelle

## Patentansprüche

1. Lagerschild (1) für einen Elektromotor (5) enthaltend eine Aufnahmeeinrichtung (3) mit einer Innenmantelfläche (10) zum Aufnehmen und Halten wenigstens eines Lagers (12)
**dadurch gekennzeichnet, dass** wenigstens vier symmetrisch angeordnete, sich radial erstreckende Erhebungen (13) so an der Innenmantelfläche (10) der Aufnahmeeinrichtung (3) positioniert sind, dass zwischen zwei an der Innenmantelfläche (10) innenliegenden Erhebungen (13) und zwei an der Innenmantelfläche (10) außenliegenden Erhebungen (13) ein Freiraum (15) zum Aufnehmen und Halten wenigstens eines Dichtungselements (16) enthalten ist.

2. Lagerschild (1) nach Anspruch 1,
**dadurch gekennzeichnet, dass** der Freiraum (15) in Form einer Nut zwischen den Erhebungen (13) ausgestaltet ist.

3. Lagerschild (1) nach Anspruch 1,
**dadurch gekennzeichnet, dass** zwischen vier und zwölf Erhebungen (13) an der Innenmantelfläche (10) der Aufnahmeeinrichtung (3) positioniert sind.

4. Lagerschild (1) nach Anspruch 1,
**dadurch gekennzeichnet, dass** das wenigstens eine Dichtungselement (16) in Form eines O-Rings ausgestaltet ist.
